(19) Europäisches Patentamt
European Patent Office
Office européen des brevets

(11) **EP 4 135 258 A1**

(12) **EUROPEAN PATENT APPLICATION**

(43) Date of publication:
**15.02.2023   Bulletin 2023/07**

(21) Application number: **21190514.6**

(22) Date of filing: **10.08.2021**

(51) International Patent Classification (IPC):
**H04L 9/32** (1990.01)        **G06F 7/58** (1980.01)
**G06Q 50/34** (2012.01)      **G07C 15/00** (1968.09)
**G07F 17/00** (1968.09)      **G07F 17/32** (1968.09)

(52) Cooperative Patent Classification (CPC):
**H04L 9/3239; G06F 7/582; G06Q 50/34;
G07C 15/00; G07F 17/00; G07F 17/3225;
G07F 17/326; G07F 17/329; H04L 9/50;**
G06Q 2220/00; H04L 2209/56

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **adesso SE**
**44269 Dortmund (DE)**

(72) Inventors:
• **Kohlmann, Andreas**
  **22459 Hamburg (DE)**
• **Bierbach, Thomas**
  **STE-ANNE-DE-KENT, NB E4S 1J3 (CA)**

(74) Representative: **Hoffmann Eitle**
**Patent- und Rechtsanwälte PartmbB**
**Arabellastraße 30**
**81925 München (DE)**

(54)   **ELECTRONIC DRAWING VIA BLOCKCHAIN SYSTEM AND METHOD**

(57)   A computer-implemented method of operating an electronic draw system, the method comprising: obtaining a bit sequence in one or more blocks of one or more different blockchains; generating a seed value based on the bit sequence in the one or more blocks of the one or more different blockchains; applying a random number generator algorithm to calculate a sequence of random numbers using the seed value as input; and converting the sequence of random numbers to an electronic drawing output of the electronic draw system.

FIG. 1A

## Description

### Technical Field

The present invention relates to electronic drawing systems. In particular, the present invention relates to a computer-implemented method of operating an electronic draw system and an electronic draw system.

### Background

The utilization of electronic draw systems (EDS) by lotteries to operate their various draw game offerings is on the rise in the industry, as lotteries are trying to keep up with progress in technology and to create efficiencies by lowering operating cost. Here, in contrast to mechanical draws, where numbers are drawn physically utilizing ball draw machines, in EDSs the winning numbers are randomly determined by computers based on certain algorithms and methods to produce results which meet appropriate randomness specifications.

An EDS may be very sophisticated, but observing an electronic draw where a key is pressed on a computer and winning numbers appear on a screen, leaves the observer wondering where these numbers came from, and with no way to retrace the steps taken to generate the result.

Security and integrity with respect to the operation of EDSs is therefore a widely discussed topic in the lottery industry at present for several reasons. Some lottery operators are faced with the challenge to evolve traditional ball draw systems to electronic and automated draw systems as technology progresses. Other lotteries that have already implemented electronic, automated draw systems for their draw-based game operations are faced with the challenge to keep EDSs that have been implemented in the past aligned with technology development.

However, known EDS in use in the industry today (such as inhouse developed, proprietary or commercially available systems) have inherent technical weaknesses and residual risks within their security and integrity. Virtually all systems are ultimately not entirely tamper-proof. Insider threats (e.g. tampering through the solution developer) remain, despite great efforts in mitigating the risks. In addition, unauthorized individuals - usually insiders - may manage to attack and manipulate the system in order to fraudulently produce predictable results. There have been several examples of fraud cases in the industry, most famous probably the case of a lottery employee at a US lottery, who operated and maintained an inhouse electronic draw system and who manipulated the components to produce predictable results to his advantage.

That is, the most prevalent reason for EDSs to continue to be under scrutiny, however, is recent cases of fraud in the lottery industry involving the tampering with the EDS or the random number generators (RNGs). These security concerns also have a cascading effect on the aforementioned reasons of considering new technology, as the industry is considering the fraud risks around EDSs and RNGs in particular. Here, the RNG is only one layer of a complex system of interacting components. One has to consider that while the RNG is the core technology component responsible for the generation of random numbers, it alone will not produce draw results. To meet the requirements for lottery draw games, RNGs are only one embedded part of a complex system of components.

Inherently, the known systems typically lack one or more of the fundamental principles required for the absolute security and integrity of the system; the unpredictability, repeatability, transparency and non-repudiation, and the comprehensibility and visibility into the draw process by an observer or the public.

### Summary of the Invention

### Technical Problem

Often much attention has been given to only one or two of the above requirements, but never to all of them together in balance. For example, physical and logical security have always been a highly prioritized measure, while e. g. the transparency was mostly overlooked, often simply due to undervaluing the openness and resulting understandability and transparency of an EDS. Instead, highly complex and secretive 'Fort Knox' solutions dominate, undermining transparency and understandability and openness. As such, an underlying technical problem is the provision of an EDS that has a controlled balance in being transparent, understandable, repeatable, unpredictable, and thus 'open'.

More specifically, there have been numerous approaches in order to ensure the security and integrity of EDS. Lotteries have developed sophisticated inhouse solutions or acquired the EDS products of a number of specialized industry vendors. The solutions range from the utilization of Hardware- and Software RNGs involving complex algorithms to the deployment of cryptographic technology to secure the integrity and security of the electronic draw process.

Regardless how sophisticated a solution currently is, there is no conventional EDS in which all aspects of the electronic draws process are comprehensible, transparent, traceable and reproducible by *anybody* in the public, which is an absolutely unique technical requirement in the field of electronic draw systems. No known electronic draw system available today meets this prerequisite in its entirety, which makes these attributes a key distinguishing factor.

As such, there is thus a need to improve the level of security and integrity in conventional electronic draw systems.

## Solution

According to a first aspect, a computer-implemented method of operating an electronic draw system, the method comprising: obtaining a bit sequence in one or more blocks of one or more different blockchains; generating a seed value based on the bit sequence in the one or more blocks of the one or more different blockchains; applying a random number generator algorithm to calculate a sequence of random numbers using the seed value as input; and converting the sequence of random numbers to an electronic drawing output of the electronic draw system.

According to a second aspect, an electronic draw system comprises: a graphical user interface configured to obtain a bit sequence in one or more blocks of one or more different blockchains; and a generation module configured to generate a seed value based on the bit sequence in the one or more blocks of the one or more different blockchains; apply a random number generator algorithm to calculate a sequence of random numbers using the seed value as input; convert the sequence of random numbers to an electronic drawing output of the electronic draw system.

## Brief Description of Figures

Embodiments of the invention will now be explained in detail, by way of non-limiting example only, with reference to the accompanying figures, described below. Like reference numerals appearing in different ones of the figures can denote identical or functionally similar elements, unless indicated otherwise.

Figure 1A illustrates a flow diagram of a computer-implemented method of operating an electronic drawing system according to an embodiment.

Figure 1B shows an electronic draw system according to an embodiment.

Figure 2 illustrates an example of three different blockchains according to an embodiment.

Figure 3 illustrates a flow diagram using the unique draw identifier (UDI) according to an embodiment.

Figure 4 illustrates a flow diagram using the UDI according to an embodiment.

Figure 5 illustrates a flow diagram using the UDI according to an embodiment.

## Description

Example embodiments of the present invention will now be described in detail with reference to the accompanying drawings.

Where technical features in the drawings, detailed description or any claim are followed by reference signs, the reference signs have been included for the sole purpose of increasing the intelligibility of the drawings, detailed description, and claims. Accordingly, neither the reference signs nor their absence have any limiting effect on the scope of any claim elements.

Software RNGs deliver a plurality of random numbers based on a certain start value, i.e. a seed value, provided to the RNG. In more general terms, if a software algorithm is used to generate random numbers, then the randomness produced relies on the source of entropy for the seed generation. This entropy source provides the actual randomness in the process, and the algorithm itself processes all supplied seeds the same and merely serves as means to convert entropy into humanly understandable randomness, and ultimately a result that makes sense in the context of the EDS. Nonetheless, it is critical that any electronic draw solution is adequately tested and certified against industry standards and specifications for randomness and distribution.

That is, software RNGs use a computational algorithm to generate a sequence of "pseudo" random numbers which are, in fact, completely determined by an initial value, which is known to the skilled person as the seed value or a key value. If the seed value is manipulated or generated negligently, the generated random numbers may still appear random but may become predictable, because the RNG delivers the same sequence of numbers if the seed value is the same.

Fully random seed values (and therefore unpredictable random numbers) may be derived from random conditions of the environment, such as physical static or thermal events, quantum states, or the like. Detecting such environmental states or setting up a quantum system requires, however, costly physical hardware to determine a random seed value, usually in combination with physically protecting the computer system involved in order to prevent unauthorized access. However, such a random seed value is not replicable and auditable, and therefore not transparent and therefore not ideal for electronic draw systems to create an 'open' system as defined above. In particular, in order to ensure and demonstrate the integrity of the electronic draw process, the applied method has to provide the capability to conduct an audit of the electronic draw process. Ideally, the audit process includes the full replication or repeat of an electronic draw. The replication of an electronic draw is preferably conducted with independent machines or computers and can serve as proof of electronic draws integrity, but also as a control in support of investigations into any challenge of the electronic draws result.

The principle of non-repudiation is one of the components of transparency, where the chain of trust between the EDS components in the generation of the sequence of random numbers from the seed generation to the final scaling of result or winning numbers from the random numbers is conclusively traceable. This means that the method has to be able to demonstrate that the electronic draw result undeniably originates from the very entropy source deployed (i. e. the seed value), regardless of the steps involved. Only a system providing this capability and transparency and openness in the seed generation meets all requirements of transparency.

Many EDS systems available in the industry boast strong encryption and highly secured components. But often it is the wrong focus in securing, locking down and over-board encryption that renders a system less transparent, more "mystical" and harder to understand by most. In simple terms, it is useless to apply sophisticated encryption methods to data that is potentially already compromised.

Rather, the EDS system has to provide solid controls for a) the prevention of tampering, and b) the detection of failures and tampering, while keeping the electronic draw process open and transparent.

That is, transparency is a crucial requirement. It ultimately means that everybody - also outside the EDS system - who is interested should be able to follow and fully replicate the electronic draw results. According to the present inventors' knowledge there is no existing electronic draw system at this point that would meet all of these requirements. The most advanced and sophisticated system available in the industry so far meet some of the requirements, but not all of them, at least not conclusively to the point where there is assurance that the conceiver or developer of the EDS cannot ultimately manipulate the system. While some systems have independent audit capability, none of them provides transparency that would enable random outsiders, players and the public to replicate the draw.

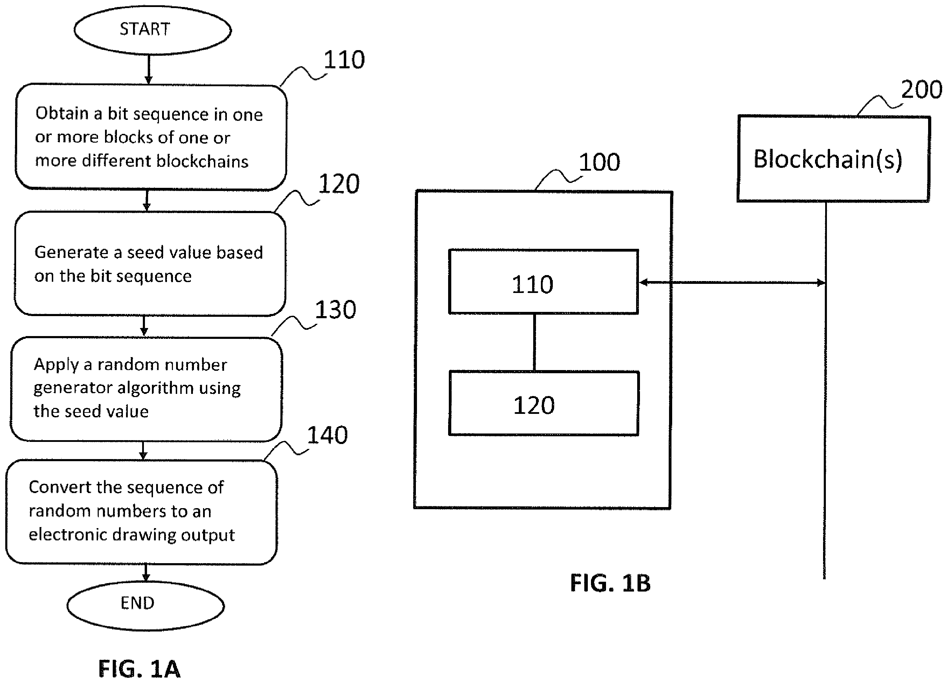

**Fig. 1A** illustrates a flow diagram according to an embodiment of a computer-implemented method of operating an electronic draw system. **Fig. 1B** shows an embodiment of an electronic draw system 100 interacting with one or more different blockchains 200.

As will be further detailed below, the method allows for the generation of an unpredictable, secure, transparent and reliable seed from a source that is comprehensible, traceable and reproducible by everybody. The method also allows for the tamper proof logging and protection of the seed that is comprehensible, traceable and reproducible by everybody. As such, all aspects of the electronic draws process become comprehensible, traceable and reproducible by everybody.

As illustrated in **Fig. 1A,** the computer-implemented method obtains, in step S110, a bit sequence in one or more blocks of one or more blockchains, in particular blocks from different blockchains. This step may be implemented by a graphical user interface (GUI) 110 shown in **Fig. 1B**. At the GUI 110, a user may set a number of blockchains that should be monitored by the EDS 100 and/or which of a plurality of different blockchains should be monitored with regard to the issuance of new blocks.

A blockchain, such as Bitcoin, Ethereum, Tether, and Litecoin, is a cryptographically linked list of blocks (stored data records) where each block comprises a cryptographic hash of a previous block. Such a chain of blocks is resistant to modifications of their data because the data in any block cannot be altered, or an additional block cannot be inserted between two existing blocks, without altering all other blocks.

Each blockchain continuously generates and publishes new blocks, but different blockchains generate and publish new blocks in different intervals. This may also be considered in terms of the so called block time, i.e. an average time for the peer-to-peer computer network to generate a new block, which may range from a few seconds (e.g. between 10 to 20 seconds for the Ethereum blockchain) to a few minutes (e.g. about 10 minutes for the bitcoin blockchain).

As an example to illustrate the concept of the present invention, block no. 662394 of the bitcoin blockchain may be considered (under Source:
https://www.blockchain.com/btc/block/0000000000000000000df2a1  c63146ada03534efffb475709bdf769cd2566b78)
which includes, among others, the following public information:

| Hash | 0000000000000000000df2a1c63146ada03534ef ffb475709bdf769cd2566b78 |
|---|---|
| Confirmations | 30,969 |
| Timestamp | 2020-12-21 21:00 PM GMT+1 |

(continued)

| Merkle root | 45dd8d81c1a82a61c49f357feb493521e413bbc7 b5f8292fe6166debb169fbf9 |
|---|---|
| Bits | 386,863,986 |

Likewise, block no. 11619499 of the Ethereum blockchain (Source: https://etherscan.io/block/11619499) includes, among others, the following public information:

| Hash | 0x8a161b5e55b22df65a3a964f78ff033a9a83d0 c5e5fdd962e7a7f6ac28dd7f19 |
|---|---|
| Timestamp | Jan-09-2021 08:20:59 AM +UTC |
| Merkle root | 0x7bbfd88a10a2c266b94f99e9764b2b386ac287 bf89ef6aa93525684e709181c9 |
| Bytes | 38,217 |

Here, both the hash and the Merkle root are absolutely unpredictable but replicable. Moreover, these bit sequences are confirmed by the peer-to-peer network involved in the mining process. The entire process is based on open algorithms and open source-codes, which contributes to the transparency that is sought by the present method.

Depending on the type of seed value that the RNG algorithm requires, either the entire hash or Merkle-Root or parts of it (e.g. extracting a suitable number of bites from the right) will therefore serve as a seed value for the RNG used to perform the electronic draw (discussed below). Here, it may be advantageous to use the Merkle root, as the present inventors have recognized that leading 0s (e.g. in the Bitcoin blockchain) or other limitations in the hash value may limit the randomness. In particular, the block's hash value results from the solution of a mathematical problem and therefore limitations can arise such as leading zeros in the case of the Bitcoin blockchain.

Obtaining a bit sequence in one or more blocks of one or more different blockchains may therefore be understood as checking (e.g. by regularly checking), as set via the GUI 110, whether one or more of a pre-defined set of monitored different blockchains has generated and published a new block and assessing a bit sequence in such a new block. Assessing the bit sequence may be associated with reading off the bit sequence in the new block and locally storing the bit sequence together with an identification of the bit sequence. That is, each bit sequence of a new blockchain block is locally stored with a corresponding identification value indicating the block and the corresponding blockchain.

The GUI 110 may display the obtained bit sequence, together with a timestamp as to when the bit sequence or plurality of bit sequences have been found, and together also with an identification of the corresponding blockchain(s) and an identification of the block(s).

The bit sequence that is obtained from a newly generated blockchain block may be at least a portion of a cryptographic hash value and/or a Merkle root (a hash of all hashes of all transactions in the block or root hash), generally provided in a header of the block. That is, the obtained bit sequence may be a part of (e.g. a predetermined number of bits) or the full cryptographic hash value or Merkle root value, which may be provided in hexadecimal format.

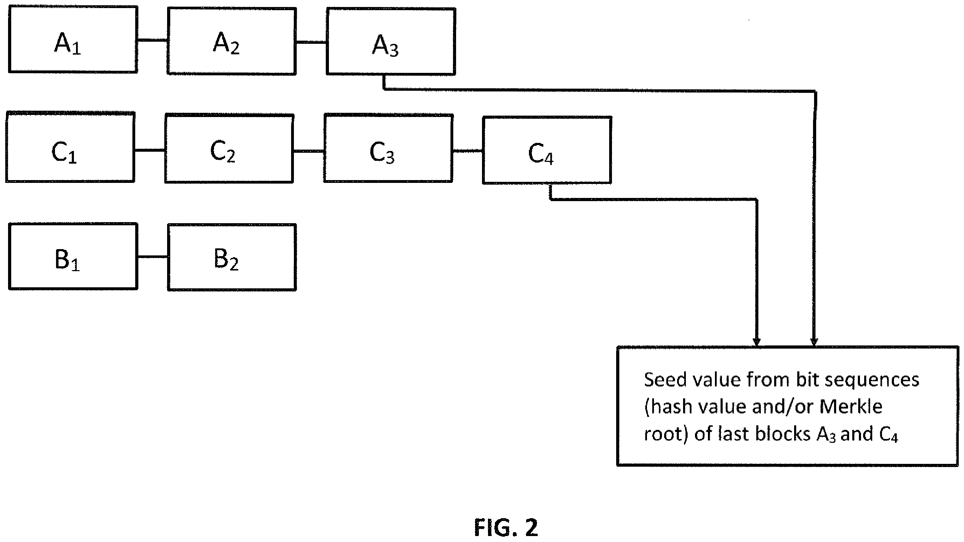

**Fig. 2** illustrates an example of three different blockchains A, B, and C. In this illustrative example, the first blockchain has 3 blocks $A_1$, $A_2$, $A_3$, the second blockchain has two blocks $B_1$ and $B_2$, and the third blockchain has four blocks $C_1$, $C_2$, $C_3$, $C_4$. The skilled person understands that this is not a limiting requirement, and that any practical realisation of a blockchain may have many more blocks, that the different blockchains have a different number of blocks, and that the block times are different.

When obtaining a bit sequence, the computer-implemented method uses the one or more blocks that have been published last. For example, each block is published with a timestamp together with the cryptographic hash value and/or the Merkle root. The skilled person understands that a hash function is any function, such as the Secure Hash Algorithm (SHA), that can be used to map data of arbitrary size to fixed-size values. The values returned by a hash function are called hash values, hash codes, digests, or simply hashes. Then, the computer-implemented method compares the timestamps of the respective blocks last generated and obtains only the bit sequence of the newest block(s).

For example, comparing the timestamps in blocks $A_3$, $B_2$, and $C_4$ (which have been generated last in their respective different blockchains), and considering further the example that the timestamps indicate the following temporal order $B_2 < A_3 < C_4$ (i.e. block $C_4$ has been generated last for all blockchains), step S110 may (i) only obtain the bit sequence (cryptographic hash value and/or the Merkle root) of block $C_4$ if a single block is used to generate a seed value. Alternatively, as further shown in **Fig. 2**, (ii) if the seed value is to be generated based on two blocks, then step S110 obtains the bit sequence (cryptographic hash value and/or the Merkle root) of block $C_4$ and $A_3$ and determines the seed value based on the bi sequences in these two last blocks of two different blockchains A and B.

Referring back to **Fig. 1A,** the computer-implemented method proceeds, in step S120, by generating a seed value based on the obtained bit sequence or a plurality of bit sequences in the one or more blocks of the one or more different blockchains. As shown in **Fig. 1B**, the obtained bit sequences may be provided to a generation module 120 (which may be a processing circuitry or processor) and the generation module is configured (programmed to) generate the seed value.

Here, the obtained bit sequence of a single last block (block $C_4$ in the example (i) above) may be used as the seed value (used to initialize the random number generator discussed below). The skilled person understands that this seed value is stored indelibly and absolutely tamperproof in the decentralized and publicly visible blockchain (e.g. in the Ethereum blockchain or any other public blockchain, which also supports smart contracts), which thus constitutes the highest possible randomness, security, integrity, transparency, traceability and replicability in an EDS. By virtue of these attributes, the present computer-implemented method is by far superior to any known electronic draw method and proprietary solution utilizing conventional random number generation.

Alternatively, the bit sequences (cryptographic hash value and/or the Merkle root) of two (blocks $C_4$ and $A_3$ in the example (ii) above and shown in **Fig. 2**) or more last blocks of different blockchains may be used to generate the seed value. There is a plurality of stable and secure different blockchains such as Bitcoin, Ethereum, Tether, and Litecoin.

Combining blocks from different blockchains will significantly speed up generation of seed values and therefore possible generation of electronic draw outputs. At the same time, it also reduces a dependency on a single blockchain (cryptocurrency) and therefore generates even more protection from manipulation from any of the blockchains involved because it simply would not be enough to compromise one of the blockchains: in order to succeed, you would have to compromise all at the same time, which is virtually impossible, given that every single blockchain has been proven extremely stable and safe from manipulation.

Here, the two or more bit sequences of the two or more last blocks may be combined by a logical bit operation to generate the seed value. In this case, as soon as any of the different blockchains produces a new hash value and/or Merkle root this bit sequence will be combined with each of the latest bit sequences (hashes and/or Merkle root) of the other blockchains to generate a new seed value.

For example, if the cryptographic hash value of the last blocks $C_4$ and $A_3$ are denoted as Hash($C_4$) and Hash($A_3$), respectively, then the logical bit operation XOR applied on each bit of the bit sequences may be used to generate the seed value by

$$\texttt{Seed value = Hash(C}_4\texttt{) XOR Hash(A}_3\texttt{)} \qquad (1)$$

Alternatively, the logical bit operation XNOR may also be used to generate the seed value based on two or more bit sequences of the two or more last blockchain blocks. Here, the seed value, which may be an integer seed value or a string seed value, may have a size of at least 32 Byte. Both XOR or XNOR are extremely fast computational operations.

For example, the following latest hash values of respective blockchains Bitcoin, Ethereum, Tether and Lightcoin (in that order) may be considered:

Hash[0] = 0x45dd8d81c1a82a61c49f357feb493521e413bbc7b5f8292fe6166debb16 9fbf9

Hash[1] = 0x8a161b5e55b22df65a3a964f78ff033a9a83d0c5e5fdd962e7a7f6ac28d d7f19

Hash[2] = 0xf3c4f8058caed553cea55888aa45affda021e3d6759f08f57a151a1cd8c f01b6

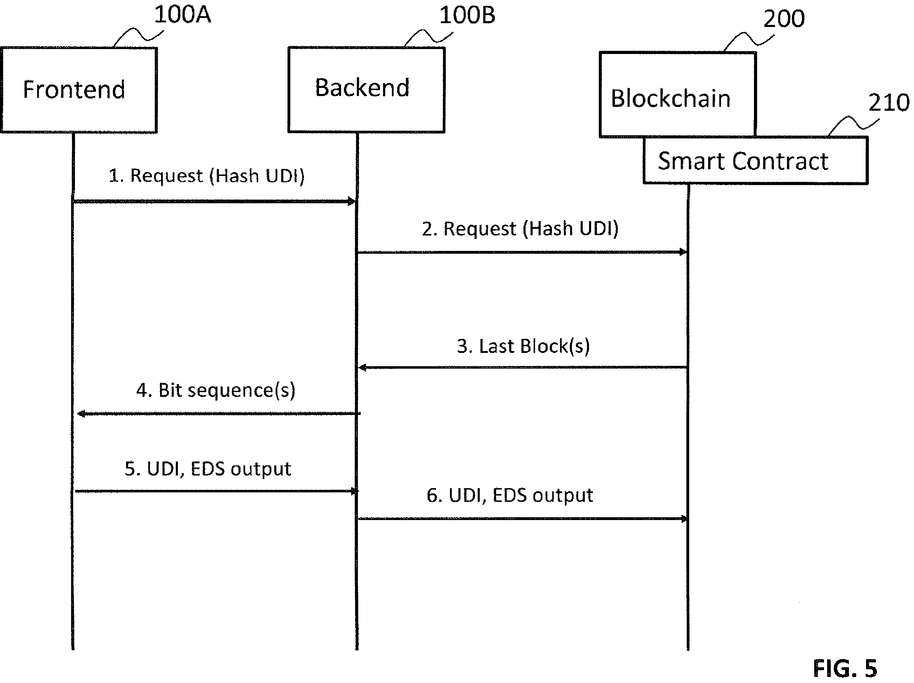

Hash[3] = 0xb0cc191324858daa71100f6a9cb20d456971abb05e1dc8a875df584d22d b6c78

with Hash[0], Hash[1], Hash[2], Hash[3] respectively holding the hashes of Bitcoin, Ethereum, Tether and Lightcoin. It is noted that all hashes have the same length of 32 bytes in this example. The Seed value to initialize the RNG may then be generated as:

$$\texttt{Seed = Hash[0] XOR Hash[1] XOR Hash[2] XOR Hash[3]} \quad (2)$$

In case that the last blocks of different blockchains have been issued with hash values and/or Merkle roots of different length, the computer-implemented method may equalize the lengths of the two or more bit sequences by a pre-determined bit filling (of the shorter bit sequence, for example by filling up 0s from the left) or bit puncturing (of the longer bit sequence). This allows for a proper use of the above logical bit operation and an error-free generation of the seed value.

The thus generated seed value meets the requirements of being random, unpredictable, replicable and transparent, in particular because all entries into a blockchain can be easily confirmed and recalculated by interested parties. The present inventors have realized that the above mechanism can even be used in case of blockchain forking, i.e. in cases when a blockchain forks into two or more chains and in which a last block is used which eventually does not become part of the longest chain. The present inventors have realized that even blocks of forked (smaller) chains remain identifiable and accessible even after the blockchain only proceeds with the longer chain after forking. As such, it is not necessary to await verification that a new block belongs to the longest chain, and the seed value may be generated without delay.

Referring back to **Fig. 1A,** the computer-implemented method proceeds, in step S130, by applying a random number generator algorithm to calculate a sequence of random numbers using the seed value as input. The random number generator algorithm may be implemented by the generation module 120 in **Fig. 1B.** That is, the seed value, which is generated based on public cryptographic hash values of newly generated blockchain blocks, is used to initialize a random number generator and the random number generator (RNG) uses a numeric algorithm (software RNG, such as a trusted open source RNG to be as transparent as possible) to determine a sequence of random numbers. The skilled person knows that initializing the random number generator with the same seed value, the same sequence of random numbers is determined.

As for the RNG, the numeric scope to be generated in an electronic draw is in most cases only a few numbers (winning numbers). A maximum required is likely in the range of numbers required for a Bingo game. Yet, likely fewer than 100 numbers are required. Therefore, the quality of the RNG is not decisive in a way that it distributes perfectly over millions of numbers - given the fact that the RNG starts with a fresh seed value for each draw.

Based on this, a proven open source RNG such as Mersenne-Twister (https://de.wikipedia.org/wiki/Mersenne-Twister) may be used as the RNG algorithm. This algorithm is well known and widely deployed in many EDSs. It has proven to be a reliable, certifiable software RNG. Another such RNG algorithm may be "seedrandom" (https://github.com/davidbau/seedrandom).

Having the sequence of random numbers determined in step S130, the computer-implemented method (generation module 120) proceeds, in step S140, by converting the sequence of random numbers to an electronic drawing output of the electronic draw system. Any suitable mechanism may be used to convert or scale the sequence of random numbers (which generally are within a specific numerical range, such as between 0 and 1) to the specific electronic draw system. That is, if the electronic draw system requires a predetermined number of numbers in a specific range of integer numbers (such as 1 - 80 for KENO), then a sequence of random numbers output from the RNG (and corresponding to the required predetermined number) is converted to the integer numbers that are output as a result of operating the electronic draw system.

This results in a completely transparent yet unpredictable electronic drawing output because the seed value is based on a blockchain bit sequence (cryptographic hash value and/or Merkle root) that cannot be predicted as long as the blockchain block(s) are not published, and yet remain fully transparent and unalterable since the blockchain bit sequence is part of the blockchain, and the generated random number sequence and therefore the electronic drawing output are therefore fully reproducible by any third party.

Then, having the used RNG and the routines to convert or scale the sequence of random numbers into the electronic drawing output (winning numbers) fully published provides interested parties with the possibility to fully trace and validate each and every step in the process of operating the EDS.

It is noted that the entire process as illustrated above in conjunction with Fig. 1A and 1B is logged at the EDS 100, and may be accessed at any time via the GUI 110.

The one or more blocks used in step S110 to obtain the bit sequence may be blocks that have been published in the respective blockchain within a pre-determined time interval before generating the seed value (which may be considered as a start of the electronic drawing). Considering the technical realization of blockchains and respective blocks, the present inventors have realized that the blocks are issued not only with a respective hash value and/or Merkle root, but also with a respective timestamp. Comparing the timestamp provided in a last block of the respective blockchain with an intrinsic system time of the computer system implementing the computer-implemented system, or referring to an accepted public time or using the network time protocol (NTP), allows a determination as to whether the last block has been published within the pre-determined time interval, e.g. within 5 minutes, or before. Only blocks that have been published within the pre-determined time interval are considered as candidates to be used for obtaining the bit sequence, other blocks outside the pre-determined time interval are disregarded.

The computer-implemented method may only consider the respective last block of the respective blockchain for the purpose of determining whether this last block has been published within the pre-determined time interval. That is, penultimate blocks and even older bocks are disregarded which saves processing and storage resources. Here, the pre-determined time interval is synchronized with a draw break (i.e. the time of the last possible participation of users in the electronic drawing), so that the last considered block has a time stamp after the draw break.

Monitoring a plurality of different blockchains with regard to the last block and its corresponding time stamp is advantageous because a last block within the pre-determined time interval may be identified in, for example, a third blockchain, even if the last blocks in a first and second blockchain have a respective time stamp outside the pre-determined time interval. This advantageously provides at least one last block within the pre-determined time interval and thus a timely electronic drawing output which usually occurs at specific and pre-determined times.

According to a further embodiment, the generation of the seed value according to step S120 may be triggered when a new block is published in one of the one or more different blockchains. That is, as soon as the computer-implemented method detects that a new block has been issued by one of the monitored blockchains, the seed value may be determined based on a bit sequence (e.g. hash value and/or Merkle root) within that new block.

According to a further embodiment, a unique draw identifier (UDI) of the electronic draw system may be generated and the seed value may be generated based on the bit sequence of the obtained one or more blocks of the one or more different blockchains and the UDI. The UDI identifies each electronic draw and may be another bit sequence that is either a random bit sequence or may have a pre-defined part (identifying time and/or place of operating the EDS) and a random part (which is randomly generated before each new drawing). The UDI is preferably generated after draw break.

The UDI and the bit sequence may be combined by a logical bit operation, such as XOR or XNOR, to determine the seed value. For example, using the above examples of the last issued blocks, if only the last block is used, then the seed value may be generated according to

$$\text{Seed value = UDI XOR Hash}(A_3) \qquad (3)$$

Further, in the example that the last two blocks are used, then the seed value may be generated according to

$$\text{Seed value = UDI XOR Hash}(C_4) \text{ XOR Hash}(A_3) \qquad (4)$$

Using a plurality of such UDIs in the above manner allows to generate a plurality of advantageous seed values from a single set of last blockchain blocks. This allows to generate a plurality of individual electronic drawing outputs from a single set of one or more last blockchain blocks without the need to wait for issuance of a new blockchain block (draw separation). This further provides a mechanism for high-speed electronic drawing systems which otherwise would be limited to the block times of the observed blockchains.

As explained above, also when using the UDI according to this embodiment, the seed value is generated after draw break, while a new UDI (also preferably generated after draw break) may be generated for each seed value. For the purpose of providing the fundamental principles for an EDS system, as explained above, only a cryptographic value (e.g. a cryptographic hash value generated by applying a pre-defined hash function) of the generated UDI is published, i.e. unalterably stored in a blockchain, which may be one of the blockchains monitored for determining when a new block is issued or a separate blockchain. The cryptographic value of the generated UDI is thus unalterably stored in the blockchain and may thus be accessed by anyone for the purpose of repeatability (as will be discussed further below). The skilled person understands that the actual value of the UDI remains unknown before operating the EDS to generate the electronic drawing output.

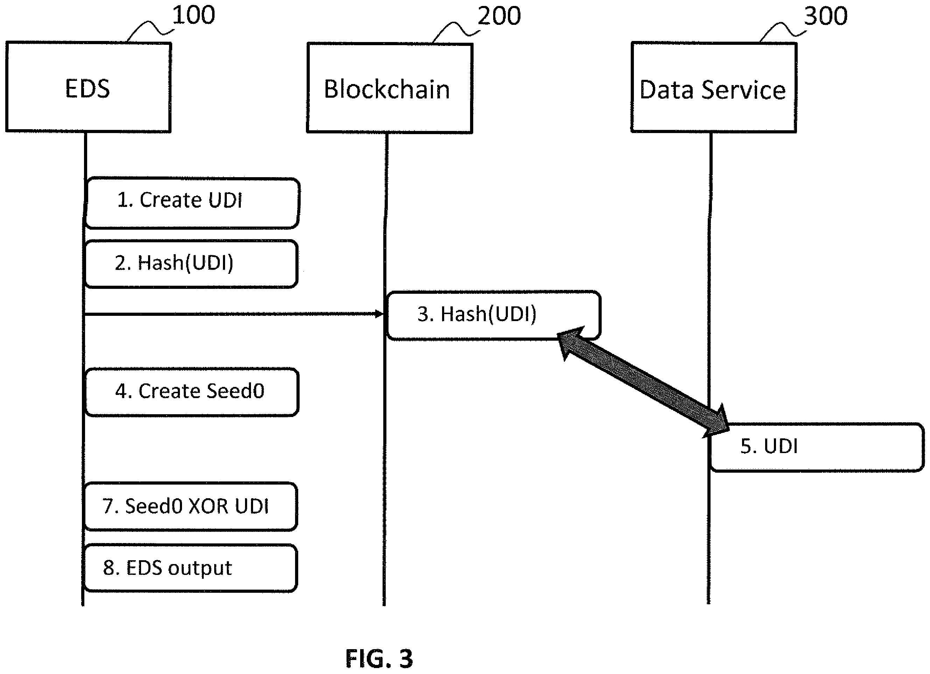

**Fig. 3** shows a flow diagram using the UDI according to this embodiment. Here, the UDI is created internally by a server or computer system that operates the EDS, and a cryptographic hash value of the UDI is made public in the blockchain before the electronic drawing (before the seed generation).

In particular, **Fig. 3** shows a server or computer system that operates the EDS, a blockchain 200 (which may be one of the different blockchains monitored for new blocks), and a public data service 300 (such as a website, an app, a database, or the like). The following sequence of protocol processes may be implemented:

1. After draw break, according to a first step, the EDS system 100 generates the UDI in a way that is not predictable to the miners of the involved blockchains. Any suitable method for generating an UDI may be used; importantly the UDI is not revealed until step 5 below.

2. According to a second step, the created UDI is hashed: Hash(UDI), for example by using the SHA-256 Hash function. It is noted that the cryptographic hash function does not allow to compute the original value UDI by knowing Hash(UDI).

3. Hash(UDI) is published as a third step. Preferably, Hash(UDI) is published in the blockchain 200, as shown in Fig. 3, to have permanent proof. It is noted that the hashed value is made public before involving blockchain(cryptocurrency) hashes.

4. An intermediate SeedO is generated as a fourth step. Here, the intermediate SeedO is generated based on a bit sequence of the obtained one or more blocks of one or more different blockchains, as explained above

5. In a fifth step, the created UDI is made available to the public, by transmission to data service 300 (as shown in Fig. 3) or by storing the actual UDI in the blockchain 200. That is, the actual UDI may thus be accessed in the data service 300 by any third party.

6. At this point (optional sixth step), any third party can access the UDI in data service 300 and check via computing Hash(UDI) and comparing with the corresponding value in the blockchain 200 that the UDI value has not been changed by the EDS.

7. In a seventh step, the actual seed value may be generated based on a bit sequence of the one or more different blockchains (intermediate SeedO) and the UDI, e.g. by calculating Seed = SeedO XOR UDI or another logical bit operation.

8. Finally, in an eighth step, the seed value is used to initialize the RNG so that a sequence of random numbers is calculated to be converted to an electronic drawing output of the EDS 300.

Advantageously, the cryptographic value of the generated UDI may also be published in the blockchain before a new block is published and used to obtain the bit sequence as described above. Then, as soon as the EDS determines the electronic drawing output, the electronic drawing output is made available to the public, e.g. to the data service 300 (on a web site, in a push notification to an electronic app or the like) together with the actual UDI (which may already been known to the public as shown in **Fig. 3**). Any third party may thus apply the pre-defined hash function to the EDS and compare the thus determined cryptographic hash value with the value stored in the blockchain. In addition, as the UDI is now known and verifiably has been used, the third party may subsequently fully reproduce the seed value, the generated random numbers, and the electronic drawing output, as all details with regard to these steps are fully disclosed before draw break.

In this way the outcome of the electronic drawing does not exclusively depend on the blockchains, and the miners cannot be manipulated - unless there is the (very unlikely) case of collusion between the EDS system and the miners of the blockchains.

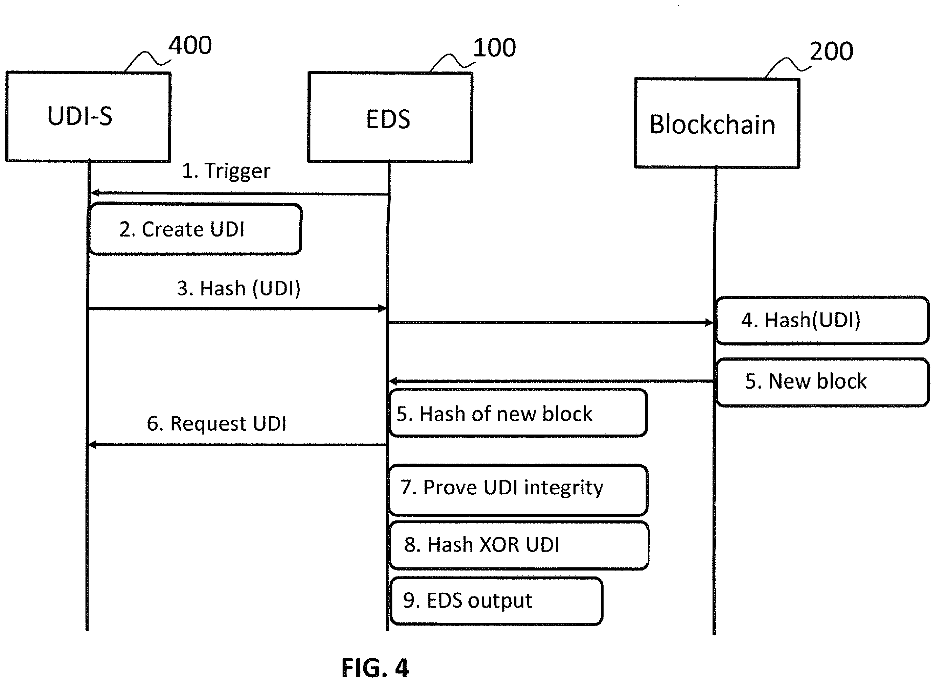

To provide a further mechanism for this collision scenario, **Fig. 4** illustrates a further embodiment according to which the UDI is generated by a first computing entity 400 (also referred to as UDI server in the following) and the cryptographic value of the UDI is reported to a second computing entity which may be the EDS server 300 (also referred to as DRAW-S in the following) . In particular, the following protocol may be applied:

1. According to a first step, the EDS (DRAW-S) 300 may trigger the UDI-S 400 for the hashed UDI.

2. In a second step, the UDI-S 400 creates the UDI and hashes the created UDI.

3. According to a third step, the UDI-S 400 reports the Hash(UDI) to the EDS (DRAW-S) 300.

4. According to a fourth step, the EDS (DRAW-S) 300 publishes the hashed UDI in the blockchain 200.

5. In a fifth step, a new block has been issued in the blockchain 200 and the EDS (DRAW-S) 300 obtains the bit sequence (e.g. a cryptographic hash thereof, as explained above).

6. In a sixth step, the EDS (DRAW-S) 300 requests the UDI from UDI-S 400.

7. According to a seventh step, upon receiving the UDI from UDI-S 400, the EDS (DRAW-S) 300 computes Hash (UDI) and compares with the Hash (UDI) as received in the third step to prove the integrity of the UDI.

8. According to an eighth step, EDS (DRAW-S) 300 generates the seed value by a logical bit operation between the bit sequence of the last block and UDI, such as Hash XOR UDI.

9. Finally, in a ninth step, EDS (DRAW-S) 300 uses the seed value to initialize the RNG so that a sequence of random numbers is calculated to be converted to an electronic drawing output of the EDS 300.

According to this embodiment, the UDI cannot be accessed by the EDS (DRAW-S) 300 between steps 2 and 6. Therefore, access to UDI-S 400 should be limited to EDS (DRAW-S) only. UDI-S 400 could also be put into sleep-mode between steps 2 and 6 reporting to EDS (DRAW-S) 300 only when it is woken-up. Alternatively, UDI-S 400 may also be implemented as a certified embedded (very tiny) system with very limited set of functionalities and limited access only with regard to providing UDIs and hashed UDI values upon request.

According to another embodiment, the computer-implemented method may further use a timestamp when generating the seed value. That is, the timestamp as to when the corresponding block(s) of the blockchain(s) is issued, as can be taken from the blocks, or a timestamp as to when the electronic drawing is ordered or carried out, may be used to generate the seed value as

$$\text{Seed value} = \text{Seed0 XOR Timestamp} \quad (5)$$

or

$$\text{Seed value} = \text{Seed0 XOR UDI XOR Timestamp} \quad (6)$$

wherein SeedO is the seed value as generated from the bit sequence of the obtained one or more different block chains (intermediate seed value). This may provide another layer of security, in addition to using the UDI, because two independent bit sequences (Hash value/Merkle root, Timestamp) from the blockchain are used to generate the seed value.

**Fig. 5** shows a flow diagram using the UDI according to another embodiment. Here, the EDS 100 may be configured with a frontend 100A and a blockchain backend 100B. The frontend 100A and the blockchain backend 100B may be two different computer terminals, for example with limited access against each other except for the pre-defined exchange of information as explained below. In particular, only the blockchain backend 100B monitors the blockchain 200 which further has a stored smart contract 210 for the EDS.

The following sequence of protocol processes may be implemented according to Fig. 5:

1. According to a first step, a first drawing request is issued from the frontend 100A of the EDS to the blockchain backend 100B of the EDS. The first drawing request, which may be generated via the GUI 110 (described above) may include an identification of the electronic drawing (Game-ID and/or Draw-ID), a hash value of an UDI. The UDI may be generated at the frontend 100A (or another entity such as the UDI-S 400 described above), for example by using simple RNG or by using a hash of the current timestamp.

2. Having received the first drawing request, the blockchain backend 100B of the EDS interacts with the smart contract 210 in the blockchain 200 and stores the content of the first draw request together with a timestamp therein.

3. According to a third step, the blockchain backend 100B obtains a bit sequence of one (or more) last block(s) of the blockchain 200 (or additional different blockchains not shown in **Fig. 5**). This bit sequence may also be stored in the smart contract 210.

4. According to a fourth step, the obtained bit sequence(s) is (are) provided by the blockchain backend 100B of the EDS to the frontend 100A. Having received the bit sequence(s), the frontend 100A may proceed to generate the seed value based on the bit sequence(s) and the UDI which is only known to the frontend at this point, according to any of the embodiments illustrated above, initialize the RNG according to the thus generated seed value and determine the EDS output (winning numbers).

5. According to a fifth step, the EDS output together with the actual UDI is transmitted to the blockchain backend 100B.

6. According to a sixth step, the blockchain backend 100B stores the EDS output together with the actual UDI in the smart contract 210, to thus publicly document the actual UDI, the used bit sequences (blockchain hash value, Merkle root), and the EDS output. The smart contract may be programmed to verify the validity of the used UDI by hashing the UDI received in the sixth step from the blockchain backend 100B and comparing the thus determined hash value with the hash value of the UDI received in the second step.

The present disclosure thus generates a secure, transparent and reliable seed from a source that is comprehensible, traceable and reproducible by everybody, even automatically in a smart contract of a blockchain, as described above. The present disclosure further teaches a tamper proof logging and protection of the seed value that is comprehensible, traceable and reproducible by everybody. The present disclosure further teaches the generation of random numbers from the thus generated seed value and their scaling into winning results in a comprehensible, traceable and reproducible way by everybody. This achieves the premise and prerequisite that all aspects of the electronic draws process are comprehensible, traceable and reproducible by any third party.

As mentioned above, the EDS 100 as well as the network nodes operating with regard to the one or more different blockchains 200 as well as the data service system or data service server 300 and the UDI-Server 400 may perform certain operations or processes described herein using the circuitry as discussed with regard to **Fig. 1B** above. In particular, these operations may be performed in response to the processing circuitry or processor (of a general generation module) executing software instructions contained in a computer-readable medium, such as the main memory, ROM and/or storage device. A computer-readable medium may be defined as a physical or a logical memory device. For example, a logical memory device may include memories within a single physical memory device or distributed across multiple physical memory devices. Each of the main memory, ROM and storage device may include computer-readable media with instructions as program code. The software instructions may be read into the main memory for another computer-readable medium, such as a storage device or from another device via the communication interface.

Further, the software instructions contained in the main memory may cause processing circuitry including a data processor, when executed on processing circuity, to cause the data processor to perform operations or processes described herein. Alternatively, hard-wired circuitry may be used in place or in combination with the software instructions to implement processes and/or operations described herein. Thus, implementations described herein are not limited to any specific combination of hardware and software.

The physical entities according to the different embodiments of the invention, including the elements, units, modules, nodes and systems may comprise or store computer programs including software instructions such that, when the computer programs are executed on the physical entities, steps and operations according to the embodiments of the invention are carried out, i.e. cause data processing means to carry out the operations. In particular, embodiments of the invention also relate to computer programs for carrying out the operations and steps according to the embodiments of the invention, and to any computer-readable medium storing the computer programs for carrying out the above-mentioned methods.

Where the term module is used, no restrictions are made regarding how distributed these elements may be and regarding how gathered these elements may be. That is, the constituent elements, modules, units of the generation module 110 of the EDS (DRAW-S) 100 as well as those of the data service system 300 and the UDI-S may be distributed in different software and hardware components or other devices for bringing about the intended function. A plurality of distinct elements and modules may also be gathered for providing the intended functionality. For example, the elements, modules, and functions of the nodes may be realized by a microprocessor and a memory similar to the above node including a bus, a processing unit, a main memory, ROM, etc. The microprocessor may be programmed such that the above-mentioned operations, which may be stored as instructions in the memory, are carried out.

Further, the elements, modules, and units of the apparatus may be implemented in hardware, software, Field Programmable Gate Arrays (FPGAs), application-specific integrated circuits (ASICs), firmware or the like.

It will be apparent to those skilled in the art that various modifications and variations can be made in the entities and methods of this invention as well as in the construction of this invention without departing from the scope or spirit of the invention.

The invention has been described in relation to particular embodiments and examples which are intended in all aspects to be illustrative rather than restrictive. Those skilled in the art will appreciate that many different combinations of hardware, software and/or firmware will be suitable for practicing the present invention.

Moreover, other implementations of the invention will be apparent to those skilled in the art from consideration of the specification and practice of the invention disclosed herein. It is intended that the specification and the examples be considered as exemplary only. To this end, it is to be understood that inventive aspects lie in less than all features of a single foregoing disclosed implementation or configuration. Thus, the true scope and spirit of the invention is indicated by the following claims.

**Claims**

1. A computer-implemented method of operating an electronic draw system, the method comprising:

   obtaining (S110) a bit sequence in one or more blocks of one or more different blockchains;
   generating (S120) a seed value based on the bit sequence in the one or more blocks of the one or more different blockchains;
   applying (S130) a random number generator algorithm to calculate a sequence of random numbers using the seed value as input;
   converting (S140) the sequence of random numbers to an electronic drawing output of the electronic draw system.

2. The computer-implemented method of claim 1, wherein the one or more blocks used to generate the seed value have been published within a pre-determined time interval before generating the seed value.

3. The computer-implemented method of one of claims 1 - 2, wherein the one or more blocks from the one or more different blockchains are used which have been published last.

4. The computer-implemented method of one of claims 1 - 3, further comprising:
triggering the generation of the seed value when a new block is published.

5. The computer-implemented method of one of claims 1 - 4, whereby at least a portion of a hash value and/or a Merkle root of the one or more blocks are used as the bit sequence.

6. The computer-implemented method of one of claims 1 - 5, wherein two or more bit sequences of two or more of the obtained blocks are combined by a logical bit operation to generate the seed value.

7. The computer-implemented method of claim 6, wherein a bit length of the two or more bit sequences is equalized by bit filling or bit puncturing.

8. The computer-implemented method of one of claims 1 - 7, further comprising:

generating a unique draw identifier for the electronic draw system; and
generating the seed value based on the bit sequence of the obtained one or more blocks of the one or more different blockchains and the unique draw identifier of the electronic draw system.

9. The computer-implemented method of claim 8, wherein only a cryptographic value of the generated unique draw identifier is published before generation of the seed value.

10. The computer-implemented method of one of claims 8 - 9, wherein

the unique draw identifier is published after an intermediate seed value is generated based on the bit sequences of the obtained one or more blocks of the one or more different blockchains,
and the seed value is generated based on the intermediate seed value and the unique draw identifier.

11. The computer-implemented method of one of claims 8 - 10, wherein the unique draw identifier is generated by a first computing entity and the cryptographic value of the unique draw identifier is reported to a second computing entity.

12. The computer-implemented method of one of claims 1 - 11, further comprising:
using a timestamp when generating the seed value.

13. The computer-implemented method of one of claims 1 - 11, further comprising:
validating the seed value by a smart contract.

14. Electronic draw system (100) comprising:

a graphical user interface (110) configured to obtain a bit sequence in one or more blocks of one or more different blockchains; and
a generation module (120) configured to

- generate a seed value based on the bit sequence in the one or more blocks of the one or more different blockchains;
- apply a random number generator algorithm to calculate a sequence of random numbers using the seed value as input;
- convert the sequence of random numbers to an electronic drawing output of the electronic draw system.

15. A computer program which, when executed by a computer, causes the computer to perform the method according to any of claims 1 to 13.

FIG. 1A

START → Obtain a bit sequence in one or more blocks of one or more different blockchains ~110 → Generate a seed value based on the bit sequence ~120 → Apply a random number generator algorithm using the seed value ~130 → Convert the sequence of random numbers to an electronic drawing output ~140 → END

FIG. 1B

100 — 110 — 120 — Blockchain(s) 200

**FIG. 2**

Seed value from bit sequences (hash value and/or Merkle root) of last blocks A₃ and C₄

**FIG. 3**

**FIG. 4**

UDI-S 400

1. Trigger

2. Create UDI

3. Hash (UDI)

6. Request UDI

EDS 100

9. EDS output

8. Hash XOR UDI

7. Prove UDI integrity

5. Hash of new block

Blockchain 200

4. Hash(UDI)

5. New block

FIG. 5

Europäisches
Patentamt

European
Patent Office

Office européen
des brevets

# EUROPEAN SEARCH REPORT

Application Number

**EP 21 19 0514**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | YONGRAE JO ET AL: "BlockLot: Blockchain based Verifiable Lottery", ARXIV.ORG, CORNELL UNIVERSITY LIBRARY, 201 OLIN LIBRARY CORNELL UNIVERSITY ITHACA, NY 14853, 2 December 2019 (2019-12-02), XP081543261, * Abstract * * Section II-C * | 1-15 | INV. H04L9/32 G06F7/58 G06Q50/34 G07C15/00 G07F17/00 G07F17/32 |
| X | JOSEPH BONNEAU ET AL: "On Bitcoin as a public randomness source", IACR, INTERNATIONAL ASSOCIATION FOR CRYPTOLOGIC RESEARCH, vol. 20151019:205945, 19 October 2015 (2015-10-19), pages 1-32, XP061019175, [retrieved on 2015-10-19] * Sections 3-5 * | 1-15 | |

TECHNICAL FIELDS
SEARCHED      (IPC)

H04L
G06F
G07G
G06Q
G07F
G07C

The present search report has been drawn up for all claims

| Place of search | Date of completion of the search | Examiner |
|---|---|---|
| Munich | 24 January 2022 | Yamajako-Anzala, A |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

 

& : member of the same patent family, corresponding
   document

EPO FORM 1503 03.82 (P04C01)